# EUROPEAN PATENT APPLICATION

(11) **EP 3 567 368 A1**
(43) Date of publication of application: **13.11.2019**
(21) Application number: 18382313.7
(22) Date of filing: 07.05.2018
(51) Int. Cl.: G01N 27/12

(54) **ELECTROLUMINESCENT SENSING DEVICES**

(71) Applicant: Fundació Institut Català de Nanociència i Nanotecnologia, 08193 Bellaterra (ES); Institució Catalana de Recerca I Estudis Avançats, 08010 Barcelona (ES)
(72) Inventor: MERKOÇI, Arben, 08290 CERDANYOLA DEL VALLÈS (ES); ÁLVAREZ DIDUK, Ruslán Raulievich, 08031 BARCELONA (ES); ABDULHADEE, Yakoh, 9600 NARATHIWAT (TH)
(74) Representative: Ponti & Partners, S.L.P

(57) **Abstract**

An electroluminescent sensing device comprising a bottom-emission structure (BES) and to an electroluminescent sensing device comprising a top-emission structure (TES), which instead of the top electrode of conventional ACEL displays comprises a sensing layer (SB, ST) made of a material that has a conductivity which changes when exposed to an analyte to be sensed and in a degree which depends on the concentration of the analyte.

Different types of analytes can be sensed with the electroluminescent sensing device of the present invention, including water vapour in air, to sense humidity, alcohol, or specific analytes that can be sensed with a molecularly imprinted polymer (MIP) processed to have affinity thereto.

## Description

### FIELD OF THE INVENTION

The present invention relates to an electroluminescent sensing device comprising a bottom-emission structure (BES) and to an electroluminescent sensing device comprising a top-emission structure (TES), which are made to sense one or more types of analytes and the concentration thereof.

### BACKGROUND OF THE INVENTION

The growing and continuous demand for flexible optoelectronics together with the evolution of wearable/portable electronics accessories have made possible that devices with good mechanical manipulation as folding, bending or rolling open up opportunities for new and diverse applications. In this perspective, alternating current electroluminescent (ACEL) displays are very promising due to their intrinsic ability of uniform light emission, low heat generation, flexible architecture and low power consumption. Also, this type of devices can be easily fabricated by inexpensive screen-printing methods. So far, ACEL has been extensively used in commercial applications such as black lighting, decorative lighting, panel display or even large-scale billboard. Nevertheless, the expansion of ACEL display technology toward the sensing field is still rather limited and have been barely exploited representing therefore, a big challenge for the scientific community.

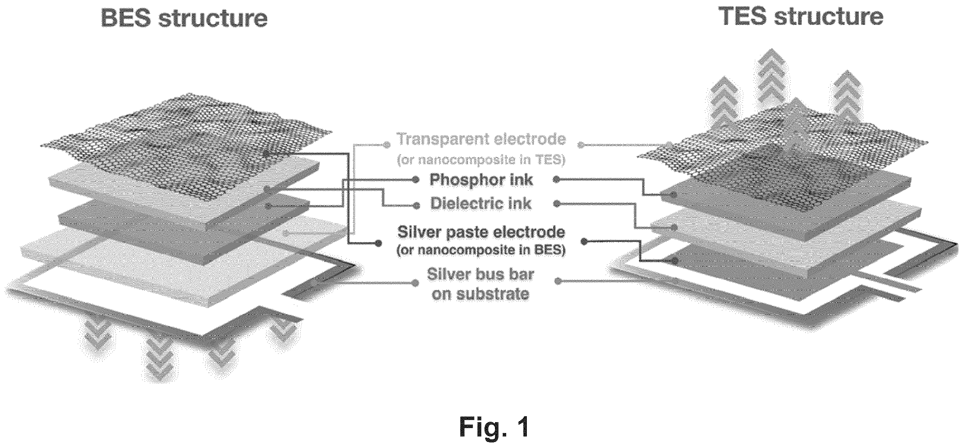

Usually, to build a conventional ACEL display, transparent conductive materials on a transparent substrate are strictly required as a rear electrode in which the emitted light goes through the substrate located at the bottom. The transparent electrode produced from indium tin oxide (ITO) is typically used for this purpose. Alternatively, top-emission structure (TES) has been explored. In TES architecture, the light from the phosphor layer is emitted directly through a top transparent conductive material, while the substrate is at the bottom (see Figure 1). In contrast to bottom-emission structure (BES), this reversed architecture usually yields in a higher brightness (under the same applied voltage) due to the shorter light path. Besides, various substrates (e.g. paper, plastic or textile) can be chosen since there is no requisite for the substrate to be transparent.

A modified ACEL display is disclosed in Xiuru Xu et al. Polar-Electrode-Bridged Electroluminescent Displays: 2D Sensors Remotely Communicating Optically, Advanced Materials, 2017, 29, 1703552, which specifically discloses a polar-electrode-bridged electroluminescent display that can be used as remotely readable, spatially responsive "alleged" sensor that emit light in response to the accumulation and distribution of materials on the device surface. The construction of the display is based on putting the conduction electrodes in the bottom layer and then in the top layer using a bridge that becomes conductive in the presence of water, or another polar fluid so the electrons flow and the display emits light.

The "alleged" electroluminescent sensing device disclosed in said paper is not really a sensor, as no layer is modified with materials. It is just a restructuring of a conventional ACEL by adding a polar bridge. The intensity of the light signal does not vary.

It is necessary to provide an alternative to the state of the art which covers the gaps found therein, by providing an electroluminescent sensing device which is really capable of sensing a variety of conductive species, to perform quantitative measurements.

### DESCRIPTION OF THE INVENTION

To that end, the present invention relates, in a first aspect, to an electroluminescent sensing device comprising a bottom-emission structure (BES) including the following elements:
- a first electrode comprising a transparent electrode film and a bus-bar electrically connected to a peripheral area thereto;
- a phosphor layer arranged over the transparent electrode film;
- a dielectric layer arranged over the phosphor layer;
- a sensing layer arranged over the dielectric layer and made of a material that has a conductivity which changes when exposed to an analyte to be sensed and in a degree which depends on the concentration of said analyte; and
- a second electrode comprising an electrically conductive track in electrical contact with said sensing layer;
wherein the phosphor layer is configured and arranged to emit light when voltage is applied between the above mentioned first and second electrodes, with a light intensity that varies as a function of said conductivity changes of the sensing layer.

In a second aspect, the present invention relates to an electroluminescent sensing device that comprises a top-emission structure (TES) including the following elements:
- a first electrode including a non-transparent electrode film;
- a dielectric layer arranged over the non-transparent electrode film;
- a phosphor layer arranged over the dielectric layer;
- a sensing layer arranged over the phosphor layer and made of a material that has a conductivity which changes when exposed to an analyte to be sensed and in a degree which depends on the concentration of said analyte; and
- a second electrode comprising an electrically conductive track in electrical contact with said sensing layer, and a bus-bar electrically connected to the electrically conductive track;
wherein the phosphor layer is configured and arranged to emit light when voltage is applied between the first and second electrodes, with a light intensity that varies as a function of said conductivity changes of the sensing layer.

By taking advantage of different configurations of the device of the present invention, for both the first and the second aspects of the invention, an ACEL display is provided that is useful to create a versatile sensing platform. The light emission of an ACEL display mainly relies on the conductivities of the top conductive layer. Hence, the change in conductance in the top layer of the ACEL display coming from an exposure of ions/charge carriers alters the intensity of the emitted light. The direct relationship between the luminance and the conductivity leads to sensing of a variety of conductive species, through the electroluminescence monitoring, according to the present invention.

According to an embodiment of the electroluminescent sensing device of the second aspect of the invention, the electrically conductive track is transparent.

For an embodiment, valid for both the first and the second aspects of the present invention, the electrically conductive track is arranged over the sensing layer following at least one closed path enclosing an exposing area through which a sensing area of the sensing layer not covered by the electrically conductive track is defined.

According to an implementation of said embodiment, the electrically conductive track is arranged over the sensing layer following several closed paths enclosing respective exposing areas through which corresponding sensing areas of the sensing layer not covered by the electrically conductive track are defined, so that a higher accuracy is achieved as it can be spatially located on which of the sensing areas the analyte is present.

By providing those several sensing areas, a higher sensing resolution is achieved, as the presence and concentration of the analyte can be located accurately with respect to the sensing areas.

Generally, for both aspects, the electroluminescent sensing device further comprises a substrate over which the bus-bar is directly arranged.

According to an embodiment, valid for both the first and the second aspects of the present invention, the sensing layer is made to sense humidity, wherein the above mentioned analyte is water vapour in air, the concentration of which determines the sensed humidity.

For an implementation of said embodiment applied to sense humidity, the sensing layer is made of a composite of graphene oxide and nafion.

For another embodiment, also valid for both the first and the second aspects of the present invention, the sensing layer is made to sense alcohol, wherein the above mentioned analyte is alcohol.

For an implementation of said embodiment applied to sense alcohol, the sensing layer is made of a composite of tin oxide.

According to another embodiment, also valid for both the first and the second aspects of the present invention, the sensing layer comprises a molecularly imprinted polymer (MIP) processed to have affinity to at least one specific analyte, so that the conductivity of the sensing layer changes depending on the electrical conductivity of the analyte bound to the sensing layer.

For an implementation of said embodiment, the MIP of the sensing layer is processed to have affinity to at least one of:
- an electroactive specific analyte, so that light emitted by the phosphor layer is directly proportional to the concentration of said electroactive specific analyte; and
- a non-electroactive specific analyte, so that light emitted by the phosphor layer is inversely proportional to the concentration of said non-electroactive specific analyte.

The electroluminescent sensing device of the present invention further comprises, for an embodiment of any of the first and the second aspects of the present invention, a light sensor made and arranged to sense light emitted by the phosphor layer.

According to an implementation of said embodiment, the electroluminescent sensing device further comprises measuring means operatively connected to an output of the light sensor to receive output signals therefrom, and that include processing means configured to process data representative of said output signals to perform measurements of the concentration of said analyte along time.

For a variant of said implementation, the processing means are configured to perform measurements of human breath based on sensed concentration of water vapour in air exhaled by a user monitored along exhale/inhale cycles.

For some embodiments, also valid for both the first and the second aspects of the present invention, the sensing layer is made to simultaneously sense several and different types of analytes, such as those indicated above.

For an embodiment of both, the first and the second aspects of the invention, the electroluminescent sensing device is implemented as a wearable device.

Other applications with interest for implementing and using the electroluminescent sensing device of the present invention are those associated to diagnostics as well as environment monitoring, safety and security.

It must be highlighted that the electroluminescent sensing device of the present invention, for both of its aspects, is not for single-use but made operate, i.e. to sense/detect in a prolonged way in time, or they can be reused after a cleaning process (especially for those embodiments with a MIP comprised by sensing layer).

### BRIEF DESCRIPTION OF THE DRAWINGS

The foregoing and other features and advantages of the invention are apparent and will be more fully understood from the following detailed description of embodiments taken in conjunction with the accompanying drawings, which must be considered in an illustrative and non-limiting manner, in which:
Figure 1 schematically shows, by means of respective exploded views, a conventional ACEL, according to a BES structure (left view) and to a TES structure (right view);
Figures 2a and 2b schematically shows, by means of respective exploded views, the electroluminescent sensing device of the present invention, for its first aspect (Figure 2a), i.e. according to a BES structure, and for its second aspect (Figure 2b), i.e. according to a TES structure, for some embodiments;

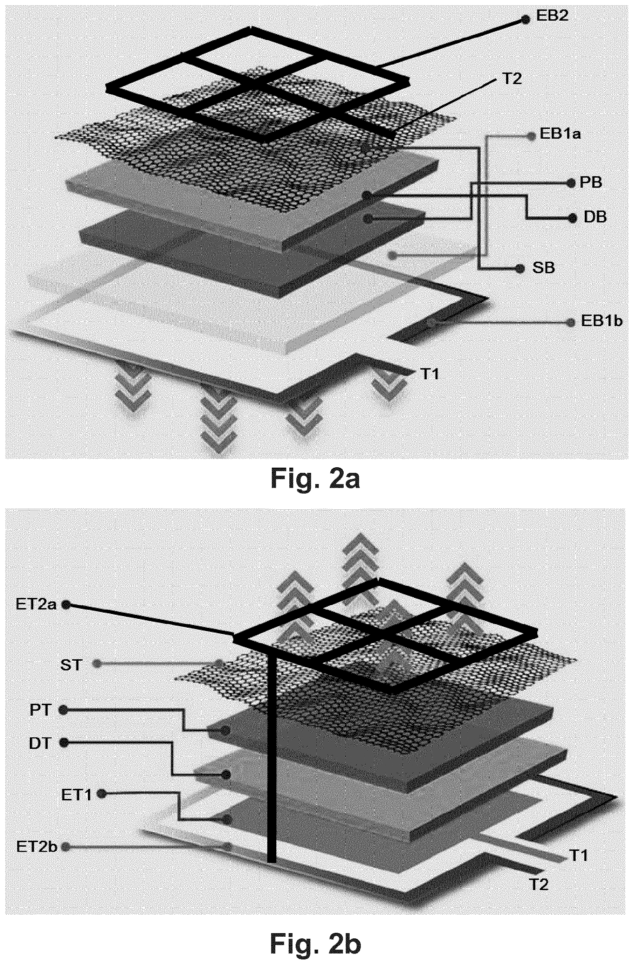

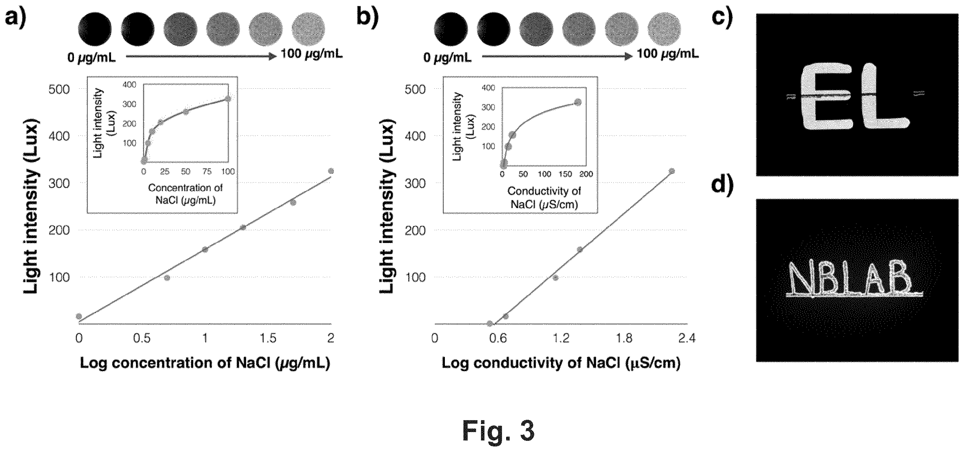

Figure 3 shows, for a device similar to that of Figure 2b but without the sensing layer ST: (a) The linear calibration of a plot between light intensity (lux) and log concentration of NaCl; and inset depicting the dependence of the light intensity vs. concentration of NaCl. (b) The linear calibration of a plot between light intensity (lux) and log conductivity of NaCl; and inset depicting the dependence of the light intensity vs. conductivity of NaCl. (c) Photograph of alphabets on the responsive ACEL display written by tap water. (d) Photograph of alphabets on the responsive ACEL display written by pencil.
Figure 4 shows:
   - for a electroluminescent sensing device prototype, or ACEL sensor, built according to the TES structure depicted in Figure 2b, for a sensing layer made of a composite of graphene oxide (GO) and nafion: (a) The light intensity (lux) response under different relative humidity and inset showing the conceptual image of an ACEL sensor upon exposure to different humidity levels. (b) Responses obtained for different GO/nafion ratios. (c) Schematic illustration of a custom-made chamber for (i) controlling humidity and (ii) breath monitoring measurements.
   - for a electroluminescent sensing device prototype, or ACEL sensor, built according to the BES structure depicted in Figure 2a, for a sensing layer made of a composite of graphene oxide (GO) and nafion: (d) Schematic image showing the ACEL sensor with BES architecture functionalized with GO nanocomposite. (e) Schematic illustration of the back view of the ACEL sensor and inset showing device arrangement with a smartphone. (f) The performance of the ACEL sensor with BES architecture for human breath monitoring.

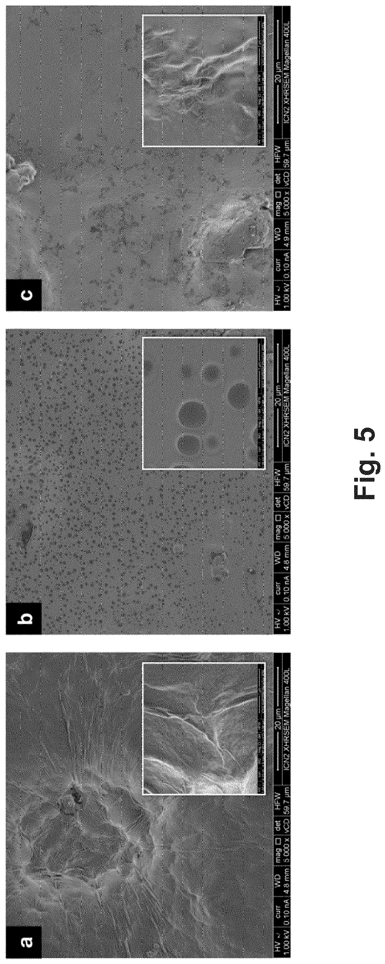

Figure 5 shows three SEM images of an ACEL display coating, i.e. of a sensing layer of the electroluminescent sensing device of the present invention, with (a) GO; (b) nafion; and (c) GO/nafion nanocomposite.

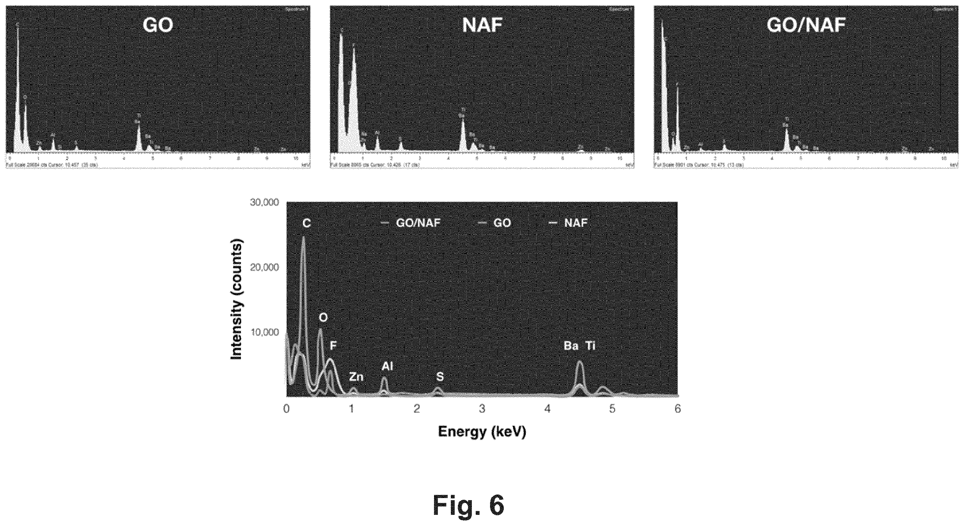

Figure 6 shows some plots of EDX spectra of GO, nafion, and GO/nafion nanocomposite.

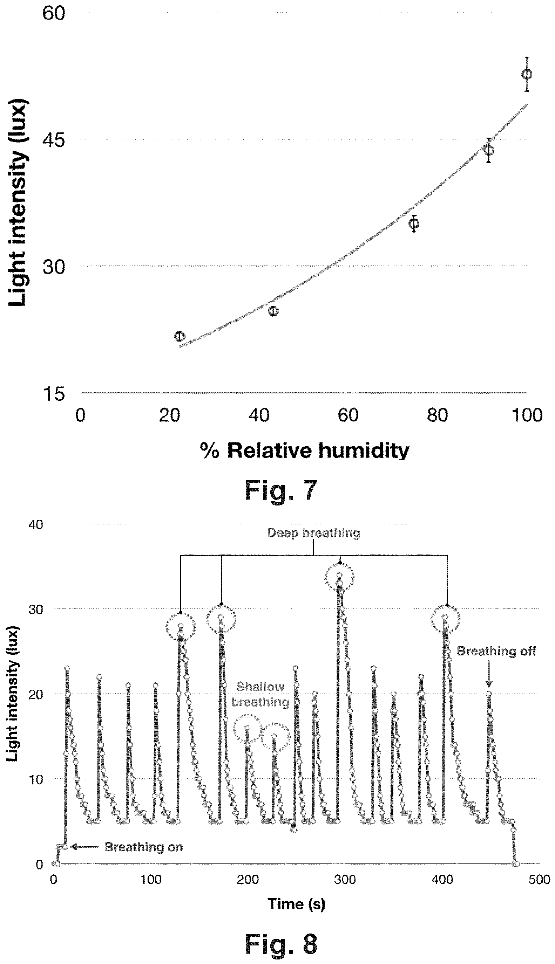

Figure 7 shows the light intensity (lux) response under different relative humidity using ACEL sensor with BES architecture, i.e. the electroluminescent sensing device of the first aspect of the invention, as depicted in Figure 2a, with a sensing layer made of a composite of graphene oxide (GO) and nafion.
Figure 8 is a plot that shows the performance of an ACEL sensor with TES architecture, i.e. of the electroluminescent sensing device of Figure 2b for an embodiment for which the sensing layer is made of GO and nafion, for breath monitoring under different exhaled patterns.

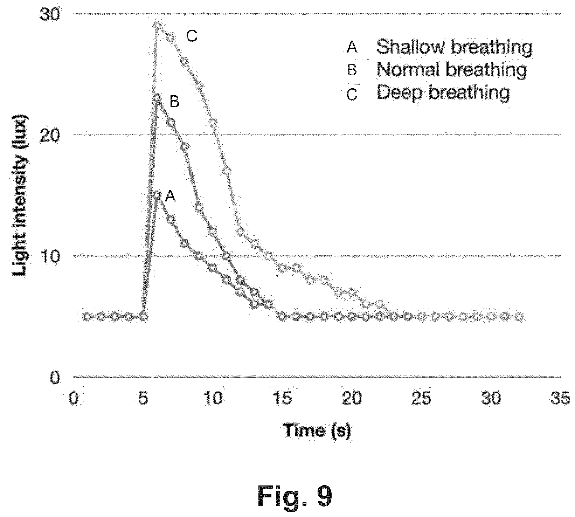

Figure 9 is a plot showing the response and recovery profile of the same ACEL breath sensor used for obtaining the plot of Figure 8.

### DESCRIPTION OF THE PREFERRED EMBODIMENTS

The present inventors engineered a powerful sensor based on ACEL display architecture lacking the top electrode of the conventional ACEL displays, i.e. an electroluminescent sensing device according to the architectures shown in Figures 2a and 2b. This sensor is capable to detect and directly visualize the target analyte. To demonstrate its sensing ability, the ionic concentration of various water samples was monitored as proof of concept. In addition advantages were taken of graphene and its interesting properties in devices applications. Using both TES (Figure 2b) and BES (Figure 2a) architectures, for the first time, a humidity sensor based on ACEL display functionalized by graphene oxide nanocomposite is introduced. Additionally, the high-performance of the developed sensor as point-of-care (POC) device to monitor human breath was demonstrated, which may be interesting for further applications.

In order to support the operation principle on which the electroluminescent sensing device of the present invention is based on, first an ACEL display was fabricated using screen-printing technique. The overall schematic device structure (5 x 5 cm) is shown in Figure 1. For fully fabrication of ACEL display with TES configuration (right view of Figure 1), the process began with coating a layer of silver paste ink onto the substrate as the rear electrode, followed by a sequential coating of dielectric layer. The phosphor was then coated on top of the dielectric layer. Finally, another layer of clear conductive ink was coated as the top electrode. As was mentioned above, in TES structures, the range of substrates is not limited to a transparent substrate; opaque flexible substrates varying from papers to commercial fabric can be used. The screen-printed electroluminescent display was fully achieved with the subsequent white light emission on different substrates (paper and plastic). Such a wide range of substrate selection may tune the resulting electroluminescence as well as the elasticity of the device platform.

Other than being just a simple light panel, this ACEL display offers promising applications. As proof of concept, various sensing platforms based on flexible ACEL display are proposed. Using the dependence between light emission and conductivity of ACEL display as a primary tool, a variety of sensing approaches were designed and applied. For instance, the sense of ionic concentration/conductance allowing water sample analysis, writable conductance, relative humidity level, and human breathing using a smartphone will be demonstrated in this document for different embodiments of the electroluminescent sensing device of the present invention.

Successful fabrication of a flexible ACEL display with TES structure was further corroborated by scanning electron microscopy (SEM) cross-sectional image. The thickness of the silver paste electrode, dielectric layer, and phosphor layer of the manufactured ACEL display was about 18 µm, 89 µm and 71 µm, respectively. Energy dispersive X-ray (SEM/EDX) analysis in line-scan mode was also performed to analyze the elemental constituent of each layer. A major component of phosphor layer was substantiated to be ZnS:AI particles, while the subsequence layer of dielectric is made of BaTiO3 particles. The individual layer surface morphology was also characterized by SEM, which showed an irregular shape of silver particles, which was extensively deposited over the whole substrate surface, a dielectric layer that exhibited a very rough surface, consisting of dense BaTIO₃ particles, and a light emitting phosphor layer that appeared as a smoother surface compared to the underlying dielectric layer. The large grain phosphor particles were distributed evenly over the surface.

To investigate the flexible and bendable ability of the electroluminescent display, the performance of the display in the presence of clear conductive ink electrode under bending condition was examined. The results showed that the emitted light intensity negligibly changed even after 1000 cycles of bending. The display could also be bent 180°, folded or rolled meanwhile maintaining the functionality. This demonstrates that the ACEL display held an excellent flexibility and durability to mechanical deformation.

Using the aforementioned TES ACEL display, a straightforward sensing platform based on electroluminescence was then sought to fabricate. In fact, the light emitted on an ACEL display is strongly affected by the conductivity of the materials over the phosphor layer. Hence, different conductivities would yield different electroluminescent intensities. To further investigate the relationship between conductivity and light emission, a solution of NaCI was carefully introduced on top of the phosphor layer of the ACEL display lacking the top electrode. When the liquid solution spread over two electrodes that have the opposing phase of AC voltage (silver bus bar and underlying rear electrode, i.e. T2 and T1 for a device similar to that of Figure 2b but without the sensing layer ST), the light emission appears instantly. This phenomenon occurs because ions in the electrolyte solution can interconnect the electronic circuit turning then the light on. The light intensity as a function of solution conductivity was further studied. Various NaCl solutions having different ionic conductivities (MilliQ water ≈ 3.32 µS cm-1; 1 mg L-1 ≈ 4.72 µS cm-1; 5 mg L-1 ≈ 14.08 µS cm-1; 10 mg L-1 = 24.0 µS cm-1; 100 mg L-1 ≈ 180.1 µS cm-1; 1000 mg L-1 ≈ 1789 µS cm-1) were tested. It should be noticed that printed-wax circles were used to define the sensing area onto the display in order to reduce large volume solution usage. Under the same applied voltage, the light intensity was proportional to the ionic concentration/conductivity of a saline solution. This result indicates that the device can determine the ionic concentration/conductivity. Furthermore, using the light sensor embedded in a smartphone camera as an optical detection tool, the linear calibration between light intensity (lux) and logarithmic concentration/conductivity of NaCl was established in the range of 0-100 mg L-1 (Figure 3a-b). It allows the quantitative evaluation of the ionic concentration. As proof of concept, water samples including milli-Q, stilled, and tap water were inquired with the ACEL display. As expected, the obtained results showed that it was evident that tap and distilled water emit higher luminescence than milli-Q water owing to their larger dissolved ions concentration in the water.

As a result of this unique conductance-based light emission property, any conductive material could be visualized on this display. Thus, simple responsive ACEL display has been exemplified in this document. Tap water or office pencil, for example, can be used as a conductive stylus to draw onto the surface of an ACEL panel, so that the light turns on instantaneously when this conductive media touched the electrode bar. Even though the electrode bar is inevitable, minimizing the bar size can make it invisible.

The potential of the electroluminescent platform was further broaden to humidity sensing application which is of prime importance in various fields. Numerous publications for humidity monitoring have been reported over years. Most of them are based on capacitive and resistive change. However, to the best of the present inventors' knowledge, there is no report for humidity sensor based on electroluminescence. Therefore, a humidity sensor based on ACEL using BES and TES structure functionalized by graphene oxide/nafion nanocomposite were applied here for the first time, building a prototype according to the structure depicted in Figure 2b, i.e. by means of an electroluminescent sensing device, comprising a top-emission structure TES including the following elements:
- a first electrode including a non-transparent electrode film ET1;
- a dielectric layer DT arranged over said non-transparent electrode film ET1;
- a phosphor layer PT arranged over said dielectric layer DT;
- a sensing layer ST arranged over said phosphor layer PT and made of a composite of graphene oxide and nafion to sense humidity, i.e. of a material that has a conductivity which changes when exposed to an analyte that is water vapour in air, the concentration of which determines the sensed humidity; and
- a second electrode comprising an electrically conductive track ET2a in electrical contact with said sensing layer ST, and a bus-bar ET2b electrically connected to said electrically conductive track ET2a;
wherein the phosphor layer PT is configured and arranged to emit light when voltage is applied between said first and second electrodes, particularly between terminals T1 and T2, with a light intensity that varies as a function of said conductivity changes of said sensing layer ST.

As shown in Figure 2b, for the embodiment there illustrated, the electrically conductive track ET2a is arranged over the sensing layer ST following in this case four closed path enclosing four exposing areas through which four respective sensing areas of the sensing layer ST not covered by the electrically conductive track EB2, ET2a are defined. For other embodiments, the number of closed paths and thus of corresponding sensing areas are defined, is above or below four, for example one.

Although not shown, generally the electroluminescent sensing device further comprises a substrate over which the bus-bar ET2b is directly arranged.

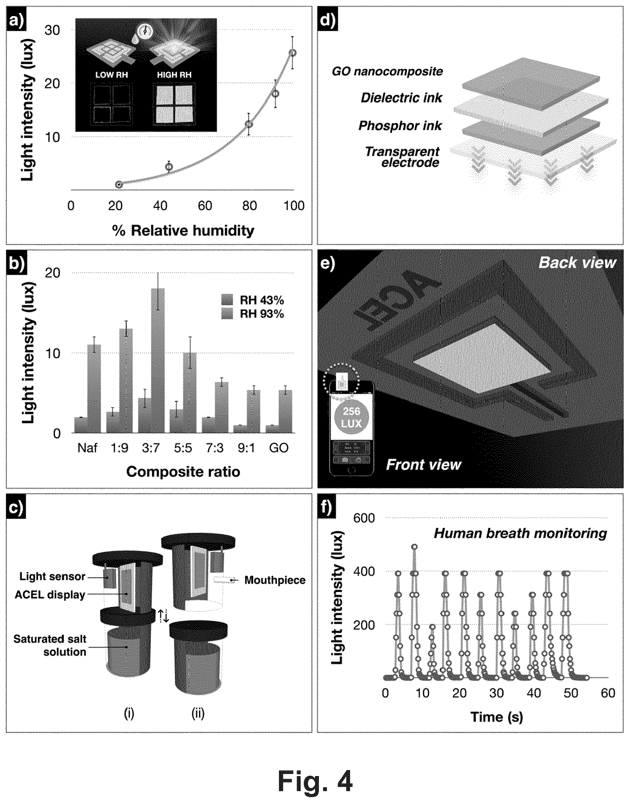

As represented in the inset of Figure 4a (where RH means Relative Humidity), for the built prototype no light is emitted at relatively low humidity. However, the light is automatically turned on in high humidity conditions. The sensing mechanism for the humidity sensor built according to the second aspect of the invention could be attributed to the proton conduction of nanocomposite formed between the 2D material (graphene oxide, GO) and nafion under a hydrated environment. In particular, GO derivative with oxygen-containing functional groups (-O-, -OH, and -COOH) possesses super-permeability to water molecules. In a hydrated environment, proton generated via the reaction of water molecules with GO surface functional groups can contribute to decreasing of the electrical impedance. Not only GO but nafion, a sulfonated fluoropolymer is also used to synergistically enhance ultrahigh proton conductivity in hydrated conditions. This sulfonic acid hydrophilic group attached to the hydrophobic backbone in nafion enables proton transport through hydrated ionic clusters. Moreover, the microstructures especially the percolated channel formed by these ionic clusters which may be sculptured by phase separation or colloidal packing is the key factor related to the proton conductivity of nafion membrane.

A larger light emission sensing area with surrounding square electrode was designed to obtain maximum light intensity for humidity measurement. A simple drop-casting of the nanocomposite between GO and nafion onto the phosphor layer of the electroluminescent sensing device of the present invention, with TES, raises interesting sensing applications. The nanocomposite based electroluminescent sensing device was then characterized by SEM. SEM image of the composite device was then compared with those made with individual graphene oxide and nafion. The formed GO film (Figure 5a) exhibited a crumpled surface of nanosheet whereas nafion film (Figure 5b) displayed a smooth surface with several pores in the films. By contrast, the pore was not observed on the GO/Nafion nanocomposite film covering of the electroluminescent sensing device (Figure 5c). The mixing of the nafion with GO was responsible for the increase in the smooth surface with random nanoflakes of GO. The fabrication of the GO/nafion nanocomposite was also confirmed by SEM/EDX analysis (Figure 6). The presence of the F peak verified the presence of nafion in GO films. It should be noted that the peaks of Zn, Al, S, Ba, and Ti could be ascribed to the elemental constituent of underlying layer of the electroluminescent sensing device.

To obtain the best sensitivity towards humidity, different proportions of GO and nafion (1:9, 3:7, 5:5, 7:3 and 9:1) were then investigated at different relative humidity (RH), where RH was controlled in a custom-made chamber (Figure 4c (i)) using vapor pressure from a set of saturated salt solution. As illustrated in Figure 4b, the light intensity response was inferior when GO was the major component (proportion) in the composite. In contrast, when nafion was in major proportion in the nanocomposite, higher sensitivity was achieved owing to its ultrahigh proton conductivity, especially for 3:7 ratio which exhibited maximum response. It is important to remark that the synergistic effect between GO and nafion also resulted in higher light intensity response regarding humidity compared to the role of nafion alone. The GO:nafion composition of 3:7 was finally selected to obtain maximum efficiency.

The performance of the electroluminescent sensing device was also studied, for the above described built prototype. As stated above, Figure 4a shows the dependence of the conductance-related light intensity (lux) on different RH values at room temperature. It is obvious that the light intensity response increases with the increment of %RH. At low RH, the physisorbed water molecules on active site of GO (oxygen-containing functional groups) cannot move freely because of the restriction from double H-bond. For this reason, large energy is required for the hopping transfer of protons between adjacent active site, and therefore, results in strong electrical resistance. However, as %RH increases, the physisorbed water layer becomes mobile and behaves like a bulk liquid. Thus, the proton hopping mechanism between water molecules occurs in GO with charge transport taking place via the conductivity generated by a Grotthuss chain reaction, which in turn yields in an increase of conductance. The exponential behavior of light intensity (lux) on the humidity (within studied range) is observed.

Additionally, the humidity sensing capability of the electroluminescent sensing device of the first aspect of the invention, i.e. that shown in Figure 2a, with BES architecture was further investigated.

In this way, an ACEL light panel was fabricated on a transparent electrode of ITO, following BES structure (Figure 1a). However, a silver top-electrode was replaced by a sensitive layer of GO nanocomposite as is schematically shown in part in Figure 4d and with more detail in Figure 2a, i.e. to build an electroluminescent sensing device, comprising a bottom-emission structure BES including the following elements:
- a first electrode comprising a transparent electrode film EB1a and a bus-bar EB1b electrically connected to a peripheral area thereto;
- a phosphor layer PB arranged over said transparent electrode film EB1a;
- a dielectric layer DB arranged over said phosphor layer PB;
- a sensing layer SB arranged over said dielectric layer DB and made of a composite of graphene oxide and nafion to sense humidity, i.e. of a material that has a conductivity which changes when exposed to an analyte that is water vapour in air, the concentration of which determines the sensed humidity; and
- a second electrode comprising an electrically conductive track EB2 in electrical contact with said sensing layer SB;
wherein said phosphor layer PB is configured and arranged to emit light when voltage is applied between said first and second electrodes, with a light intensity that varies as a function of said conductivity changes of said sensing layer SB.

As shown in Figure 2a, for the embodiment there illustrated, the electrically conductive track EB2 is arranged over the sensing layer SB following in this case four closed path enclosing four exposing areas through which four respective sensing areas of the sensing layer SB not covered by the electrically conductive track EB2 are defined. For other embodiments, the number of closed paths and thus of corresponding sensing areas are defined, is above or below four, for example one.

Although not shown, generally the electroluminescent sensing device further comprises a substrate over which the bus-bar EB1 is directly arranged.

With the above described modified BES architecture, the direct feedback from humidity on a GO nanocomposite (graphene oxide and nafion composite) layer SB would allow the phosphor layer PB on the opposite side to emit light. A light intensity response to different RH degrees is shown in Figure 7. A similar trend can be clearly observed, as in case of TES, whereby the light intensity increases exponentially with %RH. An enhanced sensitivity might be caused by the protective phosphor layer which is not hindered by the layer of GO nanocomposite. This humidity related light emission response holds a great promise to develop an innovative ACEL based humidity sensor for practical applications.

The capability of ACEL humidity sensor can be extended to further uses as point-of-care (POC) sensing device. Such a humidity-dependence light emission, enables monitoring of human breathing through the moisture content in the exhaled air. The physical characteristics of the breath, such as breath frequency can provide helpful health condition information about pulmonary and cardiac symptoms.

Hence, the present inventors performed an experiment where the air exhaled by a user was introduced using a cylindrical mouthpiece connected to the custom-made chamber as schematically illustrated in the experimental setup in Figure 4c (ii). The response was then monitored through the light emission from ACEL sensor with TES architecture. The breath sensor performance of repeated exhale/inhale cycles is displayed in Figure 8. Once the breath was blown, the substantial response from light emission is rapidly detected. After the breath is off, the light emission was then gradually decreased. Different exhaled patterns including normal, deep and shallow breath were also reflected in different light intensity responses (dashed circles).

The response and recovery times were further evaluated from single exhale/inhale cycles. As is observed in Figure 9, the sensor response to a breath could be as fast as 1s (time interval of the light sensor was limited at 1s), while the recovery time (defined as the time required to recover up to 90% of initial baseline) was varied depending on breathing patterns. For shallow and normal breathing, the recovery time was around 7s. However, in the case of deep breathing, the recovery time may take up to 12.5s (without applying any heat treatment). A huge difference between response and recovery time could be assigned to the generous hydrophilic functional moiety in GO and nafion which required a longer time to desorb water molecules. This experiment suggests that the developed breath monitoring sensor is capable to track the breathing frequency by an electroluminescent sensing device constituting a sensitive ACEL display.

To allow portability and simplicity for on-field POC testing, an ACEL humidity sensor integrated with the smartphone was then developed and demonstrated. Taking advantages of the BES configuration, the light emitted from the bottom of the ACEL sensor can be directly monitored through the light sensor embedded in a digital camera. To that end, the present inventors attached the back side of the ACEL display (1.3 x 1.3 cm) constituting the above described electroluminescent sensing device onto the front light sensor of a smartphone (Figure 4e). Experiments therewith clearly showed that the so constituted smartphone-based sensor exhibits a notable response towards human breathing (Figure 4f). Interestingly, both response and recovery time were estimated to be less than 1s. Although a clear electrode is mandatory for this architecture, an immediate and straightforward analysis was achieved without the need to use advanced equipment. A simple operation together with real-time monitoring enables it to use even by the untrained user. Based on this result, the smartphone-based ACEL sensor for human breath monitoring offers an excellent performance to become a smart tool for clinical diagnosis.

In the following below, the methods used to manufacture the above describe prototypes are described:
All commercial reagents were of analytical grade and handled according to the material safety data sheets suggested by the suppliers. A flexible silver paste (C2131014D3), dielectric ink (D2070209P6), phosphor paste (C2150213D5), and clear conductive ink (C2100629D1) were purchased from Gwent group/SunChemical (Pontypool, UK). A water-based dispersion of single layer GO sheets (5 mg mL-1) was purchased from Angstron Materials (OH, USA). 5% of Nafion 117 solution, NaCl, K2CO3, and KNO3 were purchased from Sigma-Aldrich (Madrid, Spain). CH3CO2K and KCI were purchased from Panreac (Barcelona, Spain). All aqueous solutions were freshly prepared in ultrapure water produced using a Milli-Q system (>18.2 MΩ cm-1) purchased from Millipore. SEM was performed through a Magellan 400L SEM High-Resolution SEM (FEI, Hillsboro, OR, USA). Cross-sectional SEM and EDX analysis were investigated by Quanta 650F Environmental SEM (FEI, Hillsboro, OR, USA). A semi-automatic screen-printing machine DEK 248 (DEK International, Switzerland) was used for the screen-printing process. A wax printing was patterned with a Xerox ColorQube 8580 (Connecticut, USA) wax printer.

Fabrication of ACEL display: A polyethylene terephthalate (PET) film was used as the substrate; unless stated otherwise. Firstly, a flexible silver paste was printed directly onto PET substrate as the rear electrode and front bus-bar. Then, two layers of dielectric ink, a single layer of phosphor and clear conductor were sequentially printed onto the printed electrode. After each screen-printing layer, the screen-printed film was cured at 130°C in a box oven for 10 minutes. For the use of ACEL in sensing applications, the prepared film was used without a clear conductor screen-printing. A wax printing method was used to define circular sensing spots (diameter of 8 mm). The device was completed by drawing a straight line to connect the bus-bar and sensing area with a clear conductor. An AC voltage was powered by an EL inverter build in battery model UTF-EB900-4E (for DC 9.0V input).

Fabrication of GO/nafion based humidity sensor: A 4-rectangular pattern was screen printed through a polyester screen directly on top of the ACEL display using flexible silver paste. To prepare the composite, 2.5 mg mL-1 GO solution (average lateral (x,y) and through-plane (z) dimension range of ≈ 500 nm and 1-1.2 nm, respectively, and C/O ratio about one unit (supplier's data)) was mixed with nafion and sonicated for 1 hr. The prepared composite was carefully drop-casted onto an ACEL device and allowed to dry in the oven at 60°C for 5 minutes.

The humidity measurement was conducted in a custom-made chamber consisting of an adaptable closed chamber, light sensor, and mouthpiece (Figure 4e). To achieve a certain level of humidity, RH was controlled by a series of saturated salt solution ranging low to high humidity level (CH3CO2K, K2CO3, NaCl, KCI, KNO3) at room temperature. Each humidity level is kept constant for 30 min to obtain steady RH. The solution chamber was removed from the setup when a human breath is monitored. The breath was then blown directly to an ACEL sensor through a mouthpiece while the light emission is recorded.

For other embodiments, valid for both the first aspect and the second aspects of the invention, according to the arrangements shown in Figures 2a and 2b, the sensing layer SB, ST is not made to sense humidity or human breath, but made to sense another type of analyte.

For an embodiment, the analyte is alcohol and the sensing layer SB, ST is made of a composite of tin oxide.

For another embodiment, the sensing layer SB, ST comprises a molecularly imprinted polymer MIP processed to have affinity to at least one specific analyte, so that the conductivity of the sensing layer SB, ST changes depending on the electrical conductivity of the analyte bound to the sensing layer SB, ST.

For some implementations of said embodiment, the MIP of the sensing layer SB, ST is processed to have affinity to at least one of:
- an electroactive specific analyte, so that light emitted by the phosphor layer PB, PT is directly proportional to the concentration of said electroactive specific analyte; and
- a non-electroactive specific analyte, so that light emitted by the phosphor layer PB, PT is inversely proportional to the concentration of said non-electroactive specific analyte.

A person skilled in the art could introduce changes and modifications in the embodiments described without departing from the scope of the invention as it is defined in the attached claims.

## Claims

1. Electroluminescent sensing device, comprising a bottom-emission structure (BES) including the following elements:
- a first electrode comprising a transparent electrode film (EB1a) and a bus-bar (EB1b) electrically connected to a peripheral area thereto;
- a phosphor layer (PB) arranged over said transparent electrode film (EB1a);
- a dielectric layer (DB) arranged over said phosphor layer (PB);
- a sensing layer (SB) arranged over said dielectric layer (DB) and made of a material that has a conductivity which changes when exposed to an analyte to be sensed and in a degree which depends on the concentration of said analyte; and
- a second electrode comprising an electrically conductive track (EB2) in electrical contact with said sensing layer;
wherein said phosphor layer (PB) is configured and arranged to emit light when voltage is applied between said first and second electrodes, with a light intensity that varies as a function of said conductivity changes of said sensing layer (SB).

2. Electroluminescent sensing device, comprising a top-emission structure (TES) including the following elements:
- a first electrode including a non-transparent electrode film (ET1);
- a dielectric layer (DT) arranged over said non-transparent electrode film (ET1);
- a phosphor layer (PT) arranged over said dielectric layer (DT);
- a sensing layer (ST) arranged over said phosphor layer (PT) and made of a material that has a conductivity which changes when exposed to an analyte to be sensed and in a degree which depends on the concentration of said analyte; and
- a second electrode comprising an electrically conductive track (ET2a) in electrical contact with said sensing layer (ST), and a bus-bar (ET2b) electrically connected to said electrically conductive track (ET2a);
wherein said phosphor layer (PT) is configured and arranged to emit light when voltage is applied between said first and second electrodes, with a light intensity that varies as a function of said conductivity changes of said sensing layer (ST).

3. An electroluminescent sensing device according to claim 1 or 2, wherein said electrically conductive track (EB2, ET2a) is arranged over said sensing layer (SB, ST) following at least one closed path enclosing an exposing area through which a sensing area of the sensing layer (SB, ST) not covered by the electrically conductive track (EB2, ET2a) is defined.

4. An electroluminescent sensing device according to claim 3, wherein said electrically conductive track (EB2, ET2a) is arranged over said sensing layer (SB, ST) following several closed paths enclosing respective exposing areas through which corresponding sensing areas of the sensing layer (SB, ST) not covered by the electrically conductive track (EB2, ET2a) are defined.

5. An electroluminescent sensing device according to any of the previous claims, further comprising a substrate over which said bus-bar (EB1b, ET2b) is directly arranged.

6. An electroluminescent sensing device according to any of the previous claims, wherein said sensing layer (SB, ST) is made to sense humidity, wherein said analyte is water vapour in air, the concentration of which determines the sensed humidity.

7. An electroluminescent sensing device according to claim 6, wherein said sensing layer (SB, ST) is made of a composite of graphene oxide and nafion.

8. An electroluminescent sensing device according to any of claims 1 to 5, wherein said sensing layer (SB, ST) is made to sense alcohol, wherein said analyte is alcohol.

9. An electroluminescent sensing device according to claim 8, wherein said sensing layer (SB, ST) is made of a composite of tin oxide.

10. An electroluminescent sensing device according to any of claims 1 to 5, wherein said sensing layer (SB, ST) comprises a molecularly imprinted polymer (MIP) processed to have affinity to at least one specific analyte, so that the conductivity of the sensing layer (SB, ST) changes depending on the electrical conductivity of the analyte bound to the sensing layer (SB, ST).

11. An electroluminescent sensing device according to claim 10, wherein the MIP of the sensing layer (SB, ST) is processed to have affinity to at least one of:
- an electroactive specific analyte, so that light emitted by the phosphor layer (PB, PT) is directly proportional to the concentration of said electroactive specific analyte; and
- a non-electroactive specific analyte, so that light emitted by the phosphor layer (PB, PT) is inversely proportional to the concentration of said non-electroactive specific analyte.

12. An electroluminescent sensing device according to claim 2, wherein said electrically conductive track (ET2a) is transparent.

13. An electroluminescent sensing device according to any of the previous claims, further comprising a light sensor made and arranged to sense light emitted by said phosphor layer (PB, PT).

14. An electroluminescent sensing device according to claim 13, further comprising measuring means operatively connected to an output of said light sensor to receive output signals therefrom, and that include processing means configured to process data representative of said output signals to perform measurements of the concentration of said analyte along time.

15. An electroluminescent sensing device according to claim 14, wherein said processing means are configured to perform measurements of human breath based on sensed concentration of water vapour in air exhaled by a user monitored along exhale/inhale cycles.
